# EUROPEAN PATENT APPLICATION

(11) **EP 4 836 006 A1**
(43) Date of publication of application: **04.11.2026**
(21) Application number: 25866253.5
(22) Date of filing: 10.09.2025
(51) Int. Cl.: H01M 4/525, H01M 4/505, H01M 10/052, H01M 4/02

(54) **POSITIVE ELECTRODE ACTIVE MATERIAL AND LITHIUM SECONDARY BATTERY COMPRISING SAME**

(30) Priority: 11.09.2024 KR 20240123851; 09.09.2025 KR 20250128492
(71) Applicant: EcoPro BM Co., Ltd, Cheongju-si, Chungcheongbuk-do 28116 (KR)
(72) Inventor: KIM, Sang Hyun, Cheongju-si, Chungcheongbuk-do 28116 (KR); LIM, Ra Na, Cheongju-si, Chungcheongbuk-do 28116 (KR); MOON, Chae Won, Cheongju-si, Chungcheongbuk-do 28116 (KR)
(74) Representative: Vossius & Partner Patentanwälte Rechtsanwälte mbB
(86) International application number: PCT/KR2025/014057
(87) International publication number: WO 2026/059293

(57) **Abstract**

The present invention relates to a positive electrode active material and a lithium secondary battery using a positive electrode comprising the positive electrode active material. More specifically, the present invention relates to a positive electrode active material that, by forming a coating portion comprising barium (Ba) and sulfur (S) present on at least a part of the surface of a lithium transition metal oxide, is capable of reducing lithium impurities without a water-washing process, improving conductivity through the coating portion comprising barium (Ba) and sulfur (S), and suppressing a side reaction with an electrolyte solution, and a lithium secondary battery using a positive electrode comprising the positive electrode active material.

## Description

### BACKGROUND

### 1. Field of the Invention

The present invention relates to a positive electrode active material and a lithium secondary battery using a positive electrode comprising the positive electrode active material. More specifically, the present invention relates to a positive electrode active material that, by forming a coating portion containing barium (Ba) and sulfur (S) present on at least a part of the surface of a lithium transition metal oxide, is capable of reducing lithium impurities without a water-washing process, improving conductivity through the coating portion containing barium (Ba) and sulfur (S), and suppressing side reactions with an electrolyte solution, and a lithium secondary battery using a positive electrode comprising the positive electrode active material.

### 2. Discussion of Related Art

A battery is a device that stores electric power by using materials capable of an electrochemical reaction at a positive electrode and a negative electrode. Among these, a representative example is a lithium secondary battery that stores electric power by using a difference in chemical potential generated during intercalation and deintercalation (intercalation/deintercalation) of lithium ions at a positive electrode and a negative electrode.

A lithium secondary battery uses materials capable of reversible intercalationldeintercalation of lithium ions as a positive electrode active material and a negative electrode active material, and an organic electrolyte solution or a solid polymer electrolyte is provided between a positive electrode and a negative electrode.

As the positive electrode active material, a lithium transition metal oxide is mainly used, and representative examples include composite oxides such as LiCoO₂, LiMn₂O₄, LiNiO₂, and LiMnO₂.

Among these, LiCoO₂ has been widely used due to excellent cycle life characteristics and charge/discharge efficiency; however, its price competitiveness is limited because of cobalt resource constraints and high cost.

Lithium manganese oxide series (LiMnO₂ and LiMn₂O₄) offer advantages of excellent thermal stability and low cost, but issues of low capacity and deterioration of high-temperature characteristics have been raised. A LiNiO₂-based positive electrode active material has an advantage of high discharge capacity, but is difficult to synthesize due to a cation mixing phenomenon between Li and transition metals, and as a result, has limitations in rate characteristics and cycle life characteristics.

In order to improve these problems, as materials with improved rate characteristics and cycle life characteristics while maintaining the high reversible capacity of LiNiO₂, multi-component lithium transition metal oxides such as NCM (Ni-Co-Mn), NCA (Ni-Co-Al), and NCMA (Ni-Co-Mn-Al), in which a part of nickel is substituted with cobalt, manganese and/or aluminum, have been developed.

Since such multi-component lithium transition metal oxides exhibit a higher reversible capacity as the nickel content increases, in fields requiring high-performance lithium secondary batteries, multi-component lithium transition metal oxides having a high nickel content among lithium transition metal oxides are preferred.

However, as the nickel content in the lithium transition metal oxide increases, the cation mixing phenomenon is intensified, thereby causing a problem that stability of the crystal structure is reduced. In addition, in the synthesis process of the positive electrode active material, unreacted lithium by-products such as LiOH and Li₂CO₃ tend to remain on the surface of the positive electrode active material. When the residual amount of such unreacted lithium by-products increases, problems such as gas generation, cell swelling, and gelation of an electrode paste may occur, and this may consequently lead to performance degradation of the lithium secondary battery.

Since lithium by-products are water-soluble, generally, after calcination of a precursor, they may be removed from the positive electrode active material through a water-washing process using distilled water or the like. Such a washing process can contribute to effectively reducing lithium by-products present in the positive electrode active material (particularly, lithium by-products present on the surface of the positive electrode active material). However, in the water-washing process, there is a concern that the surface of the positive electrode active material may be damaged, and due to this, electrochemical characteristics and thermal stability of the positive electrode active material may deteriorate. In addition, since the water-washing process for removing lithium by-products requires additional equipment and process steps, it acts as one of the factors increasing the manufacturing cost of the positive electrode active material.

Recently, as demand for lithium secondary batteries has rapidly increased, prices of raw materials are also increasing, and thus the lithium secondary battery industry is facing a strong need for cost reduction. In this situation, reduction or removal of the water-washing process that impairs process efficiency and increases manufacturing unit costs is emerging as an important technical challenge.

### SUMMARY OF THE INVENTION

Recently, with the growth of the electric vehicle industry, the lithium secondary battery market is rapidly expanding, and demand and required performance of positive electrode materials used therein are also continuously changing. For example, conventionally, LFP-based lithium secondary batteries emphasizing safety were mainly used, but recently, the use of nickel-based lithium transition metal oxides having a higher energy density per weight has been increasing.

In line with this trend, a positive electrode active material applied to high-performance lithium secondary batteries should be capable of securing stability and reliability at the same time even under severe operating conditions, as well as high energy density.

In particular, if lithium by-products can be reduced without a water-washing process, gas generation and stability issues can be addressed at the same time while preventing damage to the positive electrode active material.

Accordingly, an object of the present invention is to provide a positive electrode active material in which lithium impurities are reduced without a water-washing process by forming a coating portion containing barium (Ba) and sulfur (S) on the surface of the lithium transition metal oxide.

In addition, an object of the present invention is to provide a positive electrode active material that is capable of improving conductivity while suppressing side reactions with an electrolyte solution by forming a coating portion containing barium (Ba) and sulfur (S) on the surface of the lithium transition metal oxide.

The present invention for solving the above-described technical problem includes the following inventions.
[1] A positive electrode active material comprising a lithium transition metal oxide capable of intercalation/deintercalation of lithium and a coating portion present on at least a part of the surface of the lithium transition metal oxide, wherein the coating portion contains barium (Ba) and sulfur (S).
[2] The positive electrode active material according to [1], wherein the lithium transition metal oxide includes at least one selected from nickel, cobalt, manganese, and aluminum.
[3] The positive electrode active material according to [1], wherein the lithium transition metal oxide includes nickel, cobalt, and manganese.
[4] The positive electrode active material according to any one of [1] to [3], wherein barium (Ba) is doped into a crystal lattice of the lithium transition metal oxide.
[5] The positive electrode active material according to any one of [1] to [4], wherein the lithium transition metal oxide has at least one of a single-particle form consisting of one unit particle and a secondary particle form in which a plurality of unit particles are aggregated.
[6] The positive electrode active material according to [5], wherein an average particle diameter of the unit particle measured from an SEM image of the lithium transition metal oxide is 1.5 µm to 7.5 µm.
[7] The positive electrode active material according to any one of [1] to [6], wherein the lithium transition metal oxide has a single-particle form, and barium (Ba) and sulfur (S) are present on at least a part of the surface of the single particle.
[8] The positive electrode active material according to any one of [1] to [6], wherein the lithium transition metal oxide has a pseudo-single-particle form in which 30 or fewer unit particles are aggregated, and barium (Ba) and sulfur (S) are present on at least a part of a surface of a unit particle forming an outermost surface of the pseudo-single particle, a surface of a unit particle isolated inside the pseudo-single particle, and an interface between unit particles isolated inside the pseudo-single particle.
[9] The positive electrode active material according to any one of [1] to [8], wherein the lithium transition metal oxide contains nickel in an amount of 60 mol% or more with respect to all elements excluding lithium.
[10] The positive electrode active material according to any one of [1] to [9], wherein the lithium transition metal oxide has an average composition represented by the following Chemical Formula 1.

   [Chemical Formula 1] LiₐNi_{1-(b+c+d)}Co_{b}M1_{c}M2_{d}O₂

   In Chemical Formula 1,
   M1 is at least one selected from Mn and Al,
   M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu,
   0.85≤a≤1.15, 0≤b≤0.20, 0≤c≤0.20, 0≤d≤0.05, and 0<b+c≤0.40.
[11] The positive electrode active material according to any one of [1] to [10], wherein barium (Ba) is contained in the coating portion in an amount of 200 ppm to 30,000 ppm based on the total weight of the positive electrode active material.
[12] The positive electrode active material according to any one of [1] to [11], wherein sulfur (S) contained in the coating portion is contained in an amount of 500 ppm to 3,000 ppm based on the total weight of the positive electrode active material.
[13] The positive electrode active material according to any one of [1] to [12], wherein a weight ratio (S/Ba) of sulfur (S) to barium (Ba) contained in the coating portion is 0.02 or greater and 15.0 or less.
[14] The positive electrode active material according to any one of [1] to [13], wherein the coating portion contains BaSO₄.
   In addition, the present invention includes other aspects as follows.
[15] A positive electrode comprising the positive electrode active material according to any one of [1] to [14].
[16] A lithium secondary battery using the positive electrode according to [15].

According to the present invention, by forming a coating portion containing barium (Ba) and sulfur (S) on the surface of a lithium transition metal oxide, it is possible to reduce lithium by-products even without a water-washing process, and thus improve process efficiency and reduce manufacturing costs.

In addition, according to the present invention, surface damage of the positive electrode active material due to a water-washing process can be prevented, and accordingly, long-term reliability of electrochemical characteristics and thermal stability of the positive electrode active material can be increased.

In addition, according to the present invention, it is possible to improve the conductivity of the lithium transition metal oxide and suppress side reactions with the electrolyte by a coating portion containing barium (Ba) and sulfur (S) formed on the surface of the lithium transition metal oxide.

### BRIEF DESCRIPTION OF THE DRAWINGS

FIGS. 1 to 11 are SEM images of lithium transition metal oxides included in the positive electrode active materials according to Examples 1 to 11, respectively.
FIGS. 12 to 17 are SEM images of lithium transition metal oxides included in the positive electrode active materials according to Comparative Examples 1 to 6, respectively.
FIG. 18 shows the results of surface EDS analysis of the lithium transition metal oxide included in the positive electrode active material according to Example 3.
FIG. 19 shows the results of surface EDS analysis of the lithium transition metal oxide included in the positive electrode active material according to Example 11.
FIG. 20 shows the results of surface EDS analysis of the lithium transition metal oxide included in the positive electrode active material according to Comparative Example 1.
FIG. 21 shows the results of surface EDS analysis of the lithium transition metal oxide included in the positive electrode active material according to Comparative Example 5.
FIG. 22 shows the results of surface EDS analysis of the lithium transition metal oxide included in the positive electrode active material according to Comparative Example 6.

### DETAILED DESCRIPTION OF EXEMPLARY EMBODIMENTS

In order to more easily understand the present invention, specific terms are defined herein for convenience. Unless otherwise defined herein, scientific terms and technical terms used in the present invention will have meanings generally understood by a person having ordinary knowledge in the art. In addition, unless specifically specified in context, a term in singular form should be understood to include its plural form, and a term in plural form should be understood to include its singular form.

Hereinafter, a positive electrode active material according to the present invention and a lithium secondary battery using a positive electrode comprising the positive electrode active material will be described in more detail.

### Positive Electrode Active Material

The positive electrode active material herein includes a lithium transition metal oxide capable of reversible intercalation/deintercalation of lithium ions. Here, the lithium transition metal oxide means an oxide in which lithium and a metal element are combined.

The lithium transition metal oxide is a composite metal oxide capable of intercalation/deintercalation of lithium ions, and has a layered crystal structure belonging to an R-3m space group. The lithium transition metal oxide having a layered crystal structure exhibits a specific peak in a region where 2θ is 18° to 20° (for example, a 2θ=18.6±1° region) among diffraction patterns obtained from XRD analysis.

The lithium transition metal oxide may contain at least one selected from nickel, cobalt, manganese, and aluminum.

The lithium transition metal oxide may be a lithium nickel-based metal composite oxide containing nickel. To exhibit low rate characteristics and improved cycle life characteristics while maintaining the high reversible capacity of LiNiO₂, the lithium transition metal oxide may be a multi-component lithium transition metal oxide such as NCM (Ni-Co-Mn), NCA (Ni-Co-Al), and NCMA (Ni-Co-Mn-Al), wherein the lithium transition metal oxide additionally contains cobalt, manganese, and/or aluminum. In addition, the lithium transition metal oxide may be a so-called cobalt-free type lithium transition metal oxide that does not contain cobalt.

The lithium transition metal oxide may have an average composition represented by the following Chemical Formula 1. The average composition of the lithium transition metal oxide may be determined according to a known ICP analysis method using an inductively coupled plasma (ICP) spectrometer.

[Chemical Formula 1] LiₐNi_{1-(b+c+d)}Co_{b}M1_{c}M2_{d}O₂

In Chemical Formula 1,
M1 is at least one selected from Mn and Al,
M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu,
0.85≤a≤1.15, 0≤b≤0.20, 0≤c≤0.20, 0≤d≤0.05, and 0<b+c≤0.40.

In Chemical Formula 1, a, representing a ratio (Li/Ni+Co+M1+M2) of lithium to all elements other than lithium in the lithium transition metal oxide, may be 0.85 or more, 0.86 or more, 0.87 or more, 0.88 or more, 0.89 or more, 0.90 or more, 0.91 or more, 0.92 or more, 0.93 or more, 0.94 or more, 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the mole fraction of lithium to all elements other than lithium in the lithium transition metal oxide may be appropriately selected within a range satisfying the above-described definition. When the mole fraction of lithium in the lithium transition metal oxide satisfies the above range, a stable crystal structure can be formed.

In Chemical Formula 1, 1-(b+c+d) representing a mole fraction (Ni/Ni+Co+M1+M2) of nickel to all elements other than lithium in the lithium transition metal oxide may be 0.60 or more, 0.65 or more, 0.67 or more, 0.70 or more, 0.72 or more, 0.75 or more, 0.77 or more, 0.80 or more, 0.82 or more, 0.83 or more, 0.84 or more, 0.85 or more, 0.86 or more, 0.87 or more, 0.88 or more, 0.89 or more, 0.90 or more, 0.91 or more, 0.92 or more, 0.93 or more, 0.94 or more, or 0.95 or more. In addition, 1-(b+c+d) may be less than 1.0, 0.99 or less, 0.98 or less, or 0.97 or less. The upper and lower limits of the mole fraction of nickel to all elements other than lithium in the lithium transition metal oxide may be appropriately selected within a range satisfying the above-described definition. When the mole fraction of nickel in the lithium transition metal oxide satisfies the above range, a stable crystal structure can be formed, and high energy density can be exhibited.

In Chemical Formula 1, b, representing a mole fraction (Co/Ni+Co+M1+M2) of cobalt to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide is a cobalt-free type lithium transition metal oxide, b may be 0. When the lithium transition metal oxide includes cobalt, b may be greater than 0, 0.01 or more, or 0.02 or more. The upper and lower limits of the mole fraction of cobalt to all elements other than lithium in the lithium transition metal oxide may be appropriately selected within a range satisfying the above-described definition. When the mole fraction of cobalt in the lithium transition metal oxide satisfies the above range, a stable crystal structure can be formed, and good output characteristics can be exhibited.

In Chemical Formula 1, c, representing a mole fraction (M1/Ni+Co+M1+M2) of manganese and/or aluminum to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide contains manganese and/or aluminum, c may be greater than 0, 0.01 or more, or 0.02 or more. The upper and lower limits of the mole fraction of manganese and/or aluminum to all elements other than lithium in the lithium transition metal oxide may be appropriately selected within a range satisfying the above-described definition. When the mole fraction of manganese and/or aluminum in the lithium transition metal oxide satisfies the above range, a stable crystal structure can be formed.

In addition, when the lithium transition metal oxide contains cobalt and at least one selected from manganese and aluminum, in Chemical Formula 1, b+c may be 0.40 or less, 0.37 or less, 0.35 or less, 0.32 or less, 0.30 or less, 0.28 or less, 0.25 or less, 0.23 or less, 0.20 or less, 0.18 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, or 0.04 or less.

In Chemical Formula 1, M2 means a dopant that may be present in the crystal structure of the lithium transition metal oxide. The lithium transition metal oxide has a layered crystal structure in which a lithium layer containing lithium and a transition metal layer containing a transition metal are alternately arranged (alternate arrangement), and the dopant may be incorporated into at least one crystal layer among the lithium layer and the transition metal layer.

When the lithium transition metal oxide includes a dopant, in Chemical Formula 1, d representing a mole fraction (M2/Ni+Co+M1+M2) of the dopant to all elements other than lithium in the lithium transition metal oxide may be 0.05 or less, 0.045 or less, 0.04 or less, 0.035 or less, 0.03 or less, 0.025 or less, 0.02 or less, 0.015 or less, 0.01 or less, 0.009 or less, 0.008 or less, 0.007 or less, 0.006 or less, 0.005 or less, 0.004 or less, 0.003 or less, 0.002 or less, or 0.001 or less.

When the lithium transition metal oxide optionally includes a dopant, the dopant may contain at least one selected from Na, K, Mg, Ca, Sr, Ba, Rb, B, Ce, Hf, Ta, Cr, F, V, Ti, Fe, Zr, Zn, Si, Y, Nb, Ga, Sn, Mo, W, P, Ge, Nd, Gd, and Cu, preferably at least one selected from Mg, Ca, Ba, B, V, Ti, Fe, Zr, Zn, Si, Nb, Mo, W, and Cu, more preferably at least one selected from Mg, Ca, Ba, B, Ti, Zr, Si, Nb, Mo, and W.

In addition, the lithium transition metal oxide may contain barium (Ba) as a dopant. When the lithium transition metal oxide contains barium (Ba) as a dopant, the lithium transition metal oxide may further contain at least one dopant selected from Na, K, Mg, Ca, Sr, Rb, B, Ce, Hf, Ta, Cr, F, V, Ti, Fe, Zr, Zn, Si, Y, Nb, Ga, Sn, Mo, W, P, Ge, Nd, Gd, and Cu, preferably at least one dopant selected from Mg, Ca, B, V, Ti, Fe, Zr, Zn, Si, Nb, Mo, W, and Cu, more preferably at least one dopant selected from Mg, Ca, B, Ti, Zr, Si, Nb, Mo, and W.

The type, combination, and content of the dopant may be appropriately selected within a range that does not negatively affect the electrochemical characteristics and stability of the positive electrode active material.

The dopant may be doped into the lithium transition metal oxide by mixing a precursor of the lithium transition metal oxide and a dopant-containing raw material and then performing heat treatment (calcination). The lithium transition metal oxide may be obtained by mixing a precursor of the lithium transition metal oxide, a lithium raw material (for example, LiOH, Li₂CO₃, or a combination thereof), and the dopant-containing raw material and then performing heat treatment (calcination). As the dopant-containing material, a fluoride, chloride, carbonate, sulfate, nitrate, phosphate, oxide, and/or hydroxide of the above-described dopant, and the like may be used.

The precursor of the lithium transition metal oxide may be a hydroxide precursor including at least one selected from nickel, cobalt, manganese, and aluminum. In addition, the hydroxide precursor may be a hydroxide precursor containing nickel, a hydroxide precursor containing nickel and cobalt, a hydroxide precursor containing nickel, cobalt, and manganese, a hydroxide precursor containing nickel, cobalt, and aluminum, or a hydroxide precursor containing nickel, cobalt, manganese, and aluminum. The hydroxide precursor may be synthesized using a metal aqueous solution including the above-described metal element according to a known co-precipitation method. In this case, the lithium transition metal oxide may be obtained by mixing the hydroxide precursor, a lithium raw material (for example, LiOH, Li₂CO₃, or a combination thereof), and the dopant-containing raw material and then performing heat treatment (calcination).

As the precursor of the lithium transition metal oxide, an oxide precursor obtained by oxidizing a hydroxide precursor containing at least one selected from nickel, cobalt, manganese, and aluminum may be used. The oxide precursor may be obtained by oxidizing the hydroxide precursor at a temperature lower than the main calcination temperature (for example, 800°C or less, 700°C or less, 600°C or less, or 500°C or less). In this case, the lithium transition metal oxide may be obtained by mixing the oxide precursor, a lithium raw material (for example, LiOH, Li₂CO₃, or a combination thereof), and the dopant-containing raw material, followed by heat treatment (calcination).

The lithium transition metal oxide may have a single-particle form consisting of one unit particle and/or a secondary particle form in which a plurality of unit particles are aggregated. That is, the lithium transition metal oxide may consist of a single particle (or referred to as a single particle), or may be present as a secondary particle in which a plurality of single particles are aggregated. The plurality of single particles constituting the secondary particle are each referred to as primary particles or unit particles, and the secondary particle may be referred to as a bulk or bulk particle.

In addition, the lithium transition metal oxide may have a pseudo-single-particle form in which 30 or fewer, 25 or fewer, 20 or fewer, 15 or fewer, or 10 or fewer unit particles are aggregated. In this case, the lithium transition metal oxide may be referred to as a pseudo-single particle. The number of unit particles forming the pseudo-single particle may vary depending on the size of the unit particles. For example, as the size of the unit particles forming the pseudo-single particle increases, the number of unit particles forming the pseudo-single particle may decrease.

Here, when the lithium transition metal oxide that is a single particle is referred to as a non-aggregate, and the lithium transition metal oxide that is a secondary particle is referred to as an aggregate, the positive electrode active material may include an aggregate and/or a non-aggregate. For example, the positive electrode active material may include only the lithium transition metal oxide that is a non-aggregate, or may include only the lithium transition metal oxide that is an aggregate. In addition, the positive electrode active material may be present as an assembly in which the lithium transition metal oxide that is a non-aggregate and the lithium transition metal oxide that is an aggregate are mixed.

For convenience, herein, the unit particle, the single particle, the primary particle, and the secondary particle may all be referred to as a lithium transition metal oxide, and since the single particle and the primary particle are both a single particle, hereinafter, they will both be referred to as a primary particle.

The primary particle may have a rod shape, an elliptical shape, and/or an irregular shape. In addition, unless specifically intended in the manufacturing process, primary particles of various shapes may be present in the same positive electrode active material. In addition, the primary particle means a particle unit in which no grain boundary is visually observed when observed using a scanning electron microscope at a magnification of 5,000 times to 20,000 times.

In addition, the primary particle may mean one grain or crystallite. The single particle and/or the primary particle may include a single-crystal structure having a single crystallite or a polycrystal structure having a plurality of crystallites.

Herein, the average particle diameter of the single particle present as a non-aggregate and/or the primary particle constituting the aggregate may be greater than 1.1 µm, 1.15 µm or more, 1.20 µm or more, 1.25 µm or more, 1.30 µm or more, 1.35 µm or more, 1.40 µm or more, 1.45 µm or more, or 1.50 µm or more. In addition, the average particle diameter of the primary particle may be 7.5 µm or less, 7.4 µm or less, 7.3 µm or less, 7.2 µm or less, 7.1 µm or less, 7.0 µm or less, 6.9 µm or less, or 6.8 µm or less. The upper and lower limits of the average particle diameter of the primary particle may be appropriately selected within a range satisfying the above-described definition.

The average particle diameter of the primary particle may be calculated as an average value ([major axis length+minor axis length]/2) of a length in a major axis direction and a length in a minor axis direction of the primary particle. The length in the major axis direction and the length in the minor axis direction of the primary particle may be calculated from an SEM image of the non-aggregate and/or the aggregate.

Herein, the average particle diameter of the secondary particle present as an aggregate may be 2.0 µm to 20 µm, 2.0 µm to 18 µm, 2.0 µm to 15 µm, 2.0 µm to 12 µm, 3.0 µm to 20 µm, 3.0 µm to 18 µm, 3.0 µm to 15 µm, or 3.0 µm to 12 µm.

The average particle diameter of the secondary particle may vary depending on the number of primary particles constituting the secondary particle. The average particle diameter (D50) of the secondary particle may be measured using a laser diffraction method. For example, the secondary particle may be measured by dispersing secondary particles in a dispersion medium, introducing the dispersion medium into a commercially available laser diffraction particle size measurement device (for example, Microtrac MT 3000), irradiating ultrasonic waves of about 28kHz at an output of 60W, then obtaining a volume cumulative particle size distribution graph, and then obtaining a particle size corresponding to 50% of the cumulative volume. In addition, in another case, the average particle diameter of the secondary particle may be calculated as an average value of the particle diameters of secondary particles identified from an SEM image.

As described above, the lithium transition metal oxide has at least one of a single-particle form consisting of one unit particle and a secondary particle form in which a plurality of unit particles are aggregated, and when the lithium transition metal oxide has a secondary particle form, the secondary particle preferably has a pseudo-single-particle form in which 30 or fewer unit particles are aggregated. When the lithium transition metal oxide constituting the positive electrode active material has a single-particle form and/or a pseudo-single-particle form, by forming a coating portion in which barium (Ba) and sulfur (S) are present on the surface of the lithium transition metal oxide, it is possible to reduce lithium impurities even without a washing process, and furthermore, it is possible to improve the conductivity of the positive electrode active material and improve the capacity per unit volume.

The secondary particle may be divided into a central portion corresponding to a region relatively close to the exact center of the secondary particle and a surface portion corresponding to a region close to an outer surface of the secondary particle.

Unless separately defined herein, based on the average radius of the secondary particle, a region defined as a distance within half the average radius from the exact center of the secondary particle may be referred to as a central portion, and a region defined as a distance within half the average radius from the outer surface of the secondary particle may be referred to as a surface portion.

Pores, gaps, and/or grain boundaries may be present between the primary particles constituting the secondary particle.

For example, the primary particle may be spaced apart from an adjacent primary particle inside the secondary particle to form an inner pore. At this time, the inner pore may be a closed pore and/or an open pore. The closed pore refers to a pore isolated inside the secondary particle without being connected to the surface of the secondary particle, and the open pore refers to a pore connected to the surface of the secondary particle.

In addition, the primary particle may define a grain boundary, which is formed as the primary particle comes into contact with an adjacent primary particle. That is, the grain boundary is a boundary formed by adjacent primary particles coming into contact with each other, and the grain boundary should not be interpreted as being included in the primary particle. Therefore, a heterogeneous metal oxide having a composition and crystal structure different from those of the primary particle may be present along the grain boundary.

A surface exposed to the outside among the primary particles present in the surface portion of the secondary particle forms the surface (outer surface) of the secondary particle.

A coating portion is present on at least a part of the surface of the lithium transition metal oxide, and the coating portion contains barium (Ba) and sulfur (S). The coating portion may be defined as a region in which barium (Ba) and sulfur (S) are present on the surface of the lithium transition metal oxide. The coating portion may have a form that wholly or partially surrounds the surface of the lithium transition metal oxide. In addition, the coating portion may have an island shape.

When the lithium transition metal oxide has a single-particle form, a coating portion in which barium (Ba) and sulfur (S) are present may be formed on at least a part of the surface of the single particle. In addition, when the lithium transition metal oxide has a secondary particle form (or pseudo-single-particle form) in which a plurality of unit particles are aggregated, a coating portion in which barium (Ba) and sulfur (S) are present may be formed on at least a part of a surface of a unit particle forming the outermost surface of the secondary particle, a surface of a unit particle isolated inside the secondary particle, and an interface between unit particles isolated inside the secondary particle. In the positive electrode active material, barium (Ba) and sulfur (S) are preferably present in a compound form (for example, BaSO₄).

In addition, barium (Ba) and sulfur (S) may be present in an inner pore or inner gap formed by unit particles isolated inside the secondary particle being spaced apart. The inner pore or inner gap corresponds to an empty space in which a plurality of unit particles do not form direct contact with each other, and a compound containing barium (Ba) and sulfur (S) may be present in a form filling the inner pore or inner gap.

The interface between unit particles isolated inside the secondary particle may be defined as a grain boundary. The compound containing barium (Ba) and sulfur (S) may be present wholly or partially in the grain boundary, the inner pore, and/or the inner gap. In addition, the compound containing barium (Ba) and sulfur (S) may be selectively present in a region adjacent to the surface of the secondary particle, or may be irregularly distributed inside the secondary particle.

A compound containing barium (Ba) and sulfur (S) may be present on a surface of a unit particle forming the outermost surface of the secondary particle. The compound containing barium (Ba) and sulfur (S) may be present wholly or partially on the surface of the secondary particle. The compound containing barium (Ba) and sulfur (S) may be sporadically distributed on the surface of the secondary particle. In addition, the compound containing barium (Ba) and sulfur (S) may be present in a form diffused along the grain boundary, the inner pore, and/or the inner gap from the surface portion of the secondary particle toward the central portion of the secondary particle.

The compound containing barium (Ba) and sulfur (S) may be present between the secondary particles. In this case, neighboring secondary particles may be present in a state of being attached to each other by the compound containing barium (Ba) and sulfur (S).

Barium (Ba) contained in the coating portion may be contained in an amount of 200 ppm or more, 300 ppm or more, 400 ppm or more, 500 ppm or more, 550 ppm or more, 600 ppm or more, 650 ppm or more, 700 ppm or more, 750 ppm or more, 800 ppm or more, 850 ppm or more, 900 ppm or more, 950 ppm or more, or 1,000 ppm or more based on the total weight of the positive electrode active material. In addition, barium (Ba) contained in the coating portion may be contained in an amount of 30,000 ppm or less, 29,000 ppm or less, 28,000 ppm or less, 27,000 ppm or less, 26,000 ppm or less, 25,000 ppm or less, 24,000 ppm or less, 23,000 ppm or less, 22,000 ppm or less, 21,000 ppm or less, 20,000 ppm or less, 19,000 ppm or less, 18,000 ppm or less, 17,000 ppm or less, 16,000 ppm or less, 15,000 ppm or less, 14,500 ppm or less, 14,000 ppm or less, 13,500 ppm or less, 13,000 ppm or less, or 12,500 ppm or less based on the total weight of the positive electrode active material.

Sulfur (S) contained in the coating portion may be contained in an amount of 500 ppm or more, 550 ppm or more, 600 ppm or more, 650 ppm or more, 700 ppm or more, 750 ppm or more, or 800 ppm or more based on the total weight of the positive electrode active material. In addition, sulfur (S) contained in the coating portion may be contained in an amount of 3,000 ppm or less, 2,900 ppm or less, 2,800 ppm or less, 2,700 ppm or less, 2,600 ppm or less, 2,500 ppm or less, 2,400 ppm or less, 2,300 ppm or less, or 2,250 ppm or less based on the total weight of the positive electrode active material.

The upper and lower limits of the content of barium (Ba) and sulfur (S) in the positive electrode active material may be appropriately selected within a range satisfying the above-described definition.

In order for barium (Ba) and sulfur (S) to be present in a compound form (for example, BaSO₄) in the positive electrode active material, the weight ratio (S/Ba) of sulfur (S) to barium (Ba) may be 0.02 or more, 0.025 or more, 0.03 or more, 0.035 or more, 0.04 or more, 0.045 or more, 0.05 or more, 0.055 or more, 0.06 or more, 0.065 or more, 0.07 or more, 0.075 or more, 0.08 or more, 0.085 or more, 0.090 or more, 0.095 or more, 0.10 or more, 0.105 or more, or 0.11 or more, and may be 15.0 or less, 14.0 or less, 13.0 or less, 12.0 or less, 11.0 or less, 10.0 or less, 9.0 or less, 8.0 or less, 7.0 or less, 6.0 or less, 5.0 or less, 4.5 or less, 4.0 or less, 3.5 or less, 3.0 or less, 2.9 or less, 2.8 or less, 2.7 or less, 2.6 or less, 2.5 or less, 2.4 or less, 2.3 or less, 2.2 or less, 2.1 or less, 2.0 or less, 1.9 or less, 1.8 or less, 1.7 or less, 1.6 or less, 1.5 or less, 1.45 or less, 1.4 or less, 1.35 or less, 1.3 or less, 1.25 or less, or 1.2 or less.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₃-LiX (where X is a halogen element such as I or Cl), Li₂S-P₂S₃-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn(where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₋ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of Positive Electrode Active Material

### Example 1

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), Ba(OH)₂·H₂O, and LiOH·H₂O (Li/(Ni+Co+Mn+Ba) molar ratio = 1.02) were mixed to prepare a mixture. Ba(OH)₂·H₂O was mixed so as to be 0.1 mol% based on the total metal elements excluding lithium in the mixture. Subsequently, the mixture was calcined at 830°C for 11 hours under an O₂ atmosphere to obtain a lithium transition metal oxide. Specifically, during calcination of the mixture, O₂ was supplied into a calcination furnace at a flow rate of 50 L/min, and after raising the temperature in the calcination furnace to 830°C over 3 hours, calcination was performed for 11 hours. Then, after completion of calcination, the calcination furnace was naturally cooled.

### Example 2

A positive electrode active material was prepared in the same manner as in Example 1, except that 0.2 mol% of Ba(OH)₂·H₂O was used in step (b).

### Example 3

A positive electrode active material was prepared in the same manner as in Example 1, except that 0.3 mol% of Ba(OH)₂·H₂O was used in step (b).

### Example 4

A positive electrode active material was prepared in the same manner as in Example 1, except that 0.4 mol% of Ba(OH)₂·H₂O was used in step (b).

### Example 5

A positive electrode active material was prepared in the same manner as in Example 1, except that 0.5 mol% of Ba(OH)₂·H₂O was used in step (b).

### Example 6

A positive electrode active material was prepared in the same manner as in Example 1, except that 0.55 mol% of Ba(OH)₂·H₂O was used in step (b).

### Example 7

A positive electrode active material was prepared in the same manner as in Example 1, except that 0.6 mol% of Ba(OH)₂·H₂O was used in step (b).

### Example 8

A positive electrode active material was prepared in the same manner as in Example 1, except that 0.65 mol% of Ba(OH)₂·H₂O was used in step (b).

### Example 9

A positive electrode active material was prepared in the same manner as in Example 1, except that 0.7 mol% of Ba(OH)₂·H₂O was used in step (b).

### Example 10

A positive electrode active material was prepared in the same manner as in Example 1, except that 0.75 mol% of Ba(OH)₂·H₂O was used in step (b).

### Example 11

A positive electrode active material was prepared in the same manner as in Example 1, except that 1.0 mol% of Ba(OH)₂·H₂O was used in step (b).

### Comparative Example 1

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a) and LiOH·H₂O (Li/(Ni+Co+Mn) molar ratio = 1.02) were mixed to prepare a mixture. Subsequently, the mixture was calcined at 700°C for 11 hours under an O₂ atmosphere to obtain a lithium transition metal oxide. Specifically, during calcination of the mixture, O₂ was supplied into a calcination furnace at a flow rate of 50 L/min, and after raising the temperature in the calcination furnace to 700°C over 2.5 hours, calcination was performed for 11 hours. Then, after completion of calcination, the calcination furnace was naturally cooled.

### Comparative Example 2

A positive electrode active material was prepared in the same manner as in Comparative Example 1, except that the calcination temperature was 730°C in step (b). During calcination of the mixture, O₂ was supplied into a calcination furnace at a flow rate of 50 L/min, and after raising the temperature in the calcination furnace to 730°C over 2.5 hours, calcination was performed for 11 hours. Then, after completion of calcination, the calcination furnace was naturally cooled.

### Comparative Example 3

A positive electrode active material was prepared in the same manner as in Comparative Example 1, except that the calcination temperature was 830°C in step (b). During calcination of the mixture, O₂ was supplied into a calcination furnace at a flow rate of 50 L/min, and after raising the temperature in the calcination furnace to 830°C over 3 hours, calcination was performed for 11 hours. Then, after completion of calcination, the calcination furnace was naturally cooled.

### Comparative Example 4

A positive electrode active material was prepared in the same manner as in Comparative Example 1, except that the calcination temperature was 1,020°C in step (b). During calcination of the mixture, O₂ was supplied into a calcination furnace at a flow rate of 50 L/min, and after raising the temperature in the calcination furnace to 1,020°C over 4 hours, calcination was performed for 11 hours. Then, after completion of calcination, the calcination furnace was naturally cooled.

### Comparative Example 5

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), ZrO₂, and LiOH·H₂O (Li/(Ni+Co+Mn+Zr) molar ratio = 1.02) were mixed to prepare a mixture. ZrO₂ was mixed so as to be 1.0 mol% with respect to all metal elements excluding lithium in the mixture. Subsequently, the mixture was calcined at 850°C for 11 hours under an O₂ atmosphere to obtain a lithium transition metal oxide. During calcination of the mixture, O₂ was supplied into a calcination furnace at a flow rate of 50 L/min, and after raising the temperature in the calcination furnace to 850°C over 3 hours, calcination was performed for 11 hours. Then, after completion of calcination, the calcination furnace was naturally cooled.

### Comparative Example 6

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), ZrO₂, Al(OH)₃, and LiOH·H₂O (Li/(Ni+Co+Mn+Zr+Al) molar ratio = 1.02) were mixed to prepare a mixture. ZrO₂ was mixed so as to be 0.5 mol% with respect to all metal elements excluding lithium in the mixture, and Al(OH)₃ was mixed so as to be 0.5 mol% with respect to all metal elements excluding lithium in the mixture. Subsequently, the mixture was calcined at 850°C for 11 hours under an O₂ atmosphere to obtain a lithium transition metal oxide. During calcination of the mixture, O₂ was supplied into a calcination furnace at a flow rate of 50 L/min, and after raising the temperature in the calcination furnace to 850°C over 3 hours, calcination was performed for 11 hours. Then, after completion of calcination, the calcination furnace was naturally cooled.

### Preparation Example 2. Preparation of Lithium Secondary Battery (Half-Cell)

A positive electrode slurry was prepared by dispersing 92 wt% of the positive electrode active material prepared according to Preparation Example 1, 4 wt% of artificial graphite, and 4 wt% of a polyvinylidene fluoride (PVDF) binder in N-methyl-2-pyrrolidone (NMP). The prepared positive electrode slurry was uniformly applied to an aluminum thin film substrate having a thickness of 15 µm and then vacuum-dried at 135°C to form a positive electrode.

A half-cell was prepared using lithium foil as a counter electrode for the positive electrode, a porous polyethylene film (Celgard 2300) having a thickness of 25 µm as a separator, and an electrolyte in which LiPF₆ was present at a concentration of 1.15M in a solvent in which ethylene carbonate and ethyl methyl carbonate were mixed at a volume ratio of 3:7.

### Preparation Example 3. Preparation of Lithium Secondary Battery (Full-Cell)

A positive electrode slurry was prepared by dispersing 90wt% of the positive electrode active material prepared according to Preparation Example 1, 4.5 wt% of carbon black, and 5.5 wt% of a polyvinylidene fluoride (PVDF) binder in N-methyl-2-pyrrolidone (NMP). The prepared positive electrode slurry was uniformly applied to an aluminum thin film having a thickness of 15 µm and vacuum-dried at 135°C to prepare a positive electrode.

A full-cell was prepared using a graphite electrode as a counter electrode for the positive electrode, a porous polyethylene film (Celgard 2300) having a thickness of 20 µm as a separator, and an electrolyte in which LiPF₆ was present at a concentration of 1.15 M in a solvent in which ethylene carbonate, dimethyl carbonate, and ethyl methyl carbonate were mixed at a volume ratio of 2:4:4.

### Experimental Example 1. Composition Analysis of Positive Electrode Active Material

The content (ppm) of barium (Ba) and sulfur (S) included in the positive electrode active material was measured through ICP analysis of each positive electrode active material prepared in Preparation Example 1. The ICP analysis was performed according to a known method using an inductively coupled plasma (ICP) spectrometer. The content (ppm) of barium (Ba) and sulfur (S) measured according to the ICP analysis is shown in Table 1 below. In Comparative Examples 1 to 6, Ba was not detected in the final product, i.e., the positive electrode active material (lithium transition metal oxide), because Ba(OH)₂·H₂O was not used in step (b).

**[Table 1]**

| Classification | Ba (ppm) | S (ppm) | S/Ba (ppm/ ppm) |
|---|---|---|---|
| Example 1 | 1,070 | 1,234 | 1.153 |
| Example 2 | 2,240 | 1,220 | 0.545 |
| Example 3 | 3,309 | 1,197 | 0.362 |
| Example 4 | 4,675 | 880 | 0.188 |
| Example 5 | 6,094 | 914 | 0.150 |
| Example 6 | 6,724 | 933 | 0.139 |
| Example 7 | 8,002 | 1.029 | 0.129 |
| Example 8 | 7,961 | 958 | 0.120 |
| Example 9 | 8,931 | 995 | 0.111 |
| Example 10 | 9,245 | 1,218 | 0.132 |
| Example 11 | 12,421 | 2.201 | 0.177 |
| Comparative Example 1 | n.d. | 1,111 | - |
| Comparative Example 2 | n.d. | 1,708 | - |
| Comparative Example 3 | n.d. | 1,750 | - |
| Comparative Example 4 | n.d. | 1,783 | - |
| Comparative Example 5 | n.d. | 1,230 | - |
| Comparative Example 6 | n.d. | 1,917 | - |

| | | | |
|---|---|---|---|
| *n.d.: not detected | | | |

### Experimental Example 2. SEM Analysis of Positive Electrode Active Material

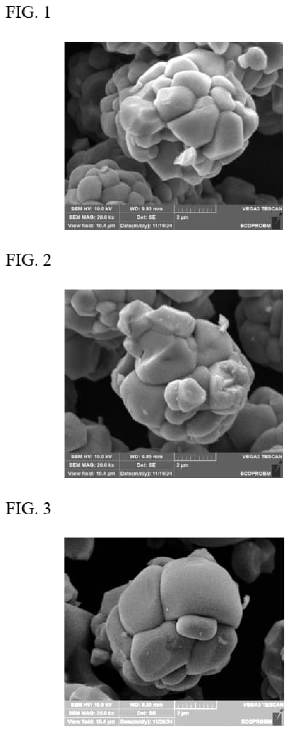

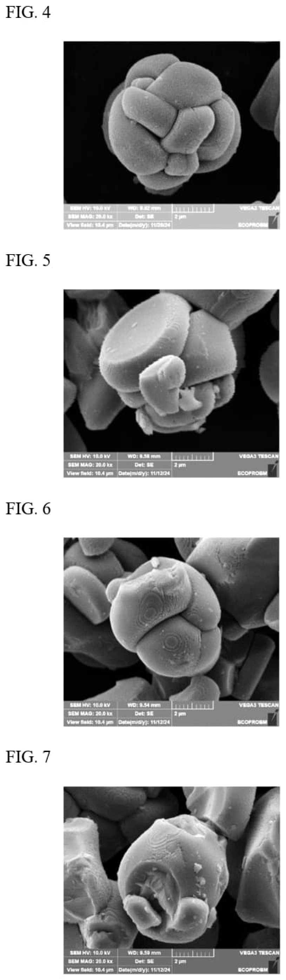

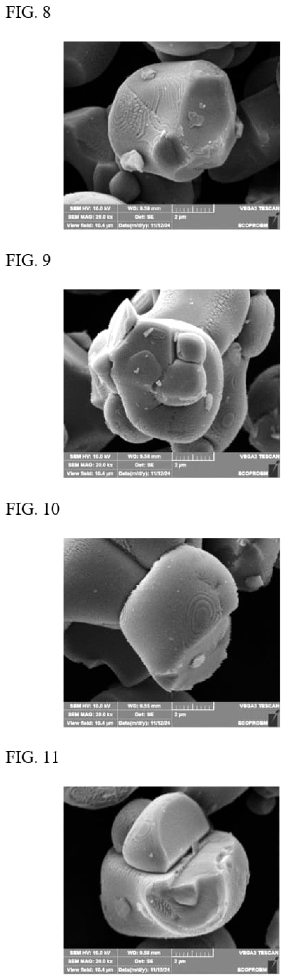

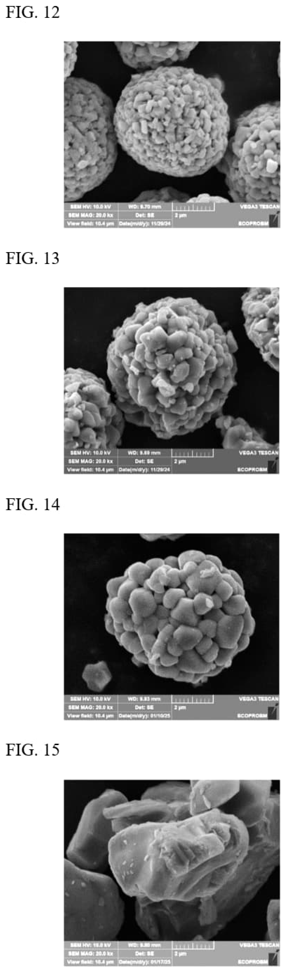

In order to confirm the size of unit particles of each positive electrode active material (lithium transition metal oxide) prepared in Preparation Example 1, SEM images were obtained using a scanning electron microscope. FIGS. 1 to 11 are SEM images of lithium transition metal oxides included in the positive electrode active materials according to Examples 1 to 11, respectively, and FIGS. 12 to 17 are SEM images of lithium transition metal oxides included in the positive electrode active materials according to Comparative Examples 1 to 6, respectively.

Referring to FIGS. 1 to 17, it can be confirmed that the positive electrode active materials according to Examples 1 to 11 and the positive electrode active materials according to Comparative Examples 4 to 6 include a lithium transition metal oxide having at least one of a single-particle form consisting of one unit particle and a pseudo-single-particle form in which 30 or fewer unit particles are aggregated. On the other hand, it can be confirmed that the positive electrode active materials according to Comparative Examples 1 to 3 have a polycrystal structure in which the number of unit particles exceeds 30.

Subsequently, using an image analyzer program, the major axis length and minor axis length of the unit particles were measured, and the average particle diameter was calculated by setting the particle diameter of the unit particle to (major axis length+minor axis length)/2. The average particle diameter of the unit particles calculated according to the SEM analysis is shown in Table 2 below.

**[Table 2]**

| Classification | Unit Particle Average Particle Diameter ( µm) |
|---|---|
| Example 1 | 1.52 |
| Example 2 | 2.36 |
| Example 3 | 2.50 |
| Example 4 | 4.21 |
| Example 5 | 5.03 |
| Example 6 | 5.15 |
| Example 7 | 5.97 |
| Example 8 | 6.19 |
| Example 9 | 6.38 |
| Example 10 | 6.56 |
| Example 11 | 6.71 |
| Comparative Example 1 | 0.77 |
| Comparative Example 2 | 0.94 |
| Comparative Example 3 | 1.10 |
| Comparative Example 4 | 7.57 |
| Comparative Example 5 | 2.52 |
| Comparative Example 6 | 2.66 |

In addition, surface SEM/EDS analysis was performed on the positive electrode active materials (lithium transition metal oxides) according to Examples 3 and 11, and Comparative Examples 1, 5, and 6 to confirm the coating material present on the surface of the lithium transition metal oxide.

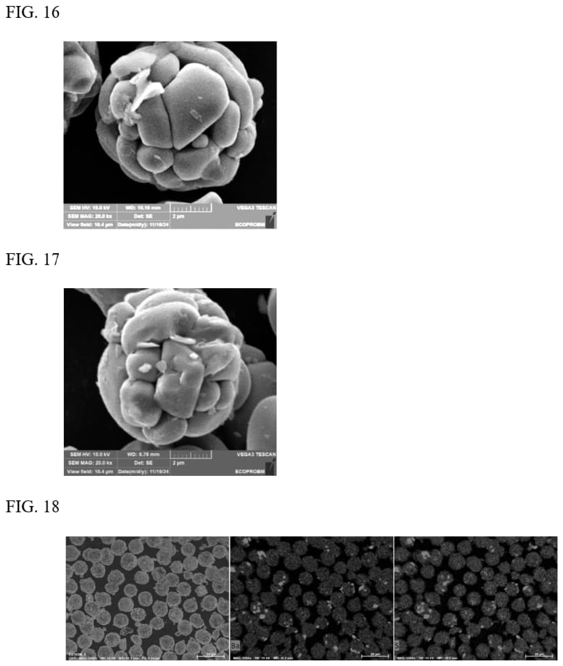

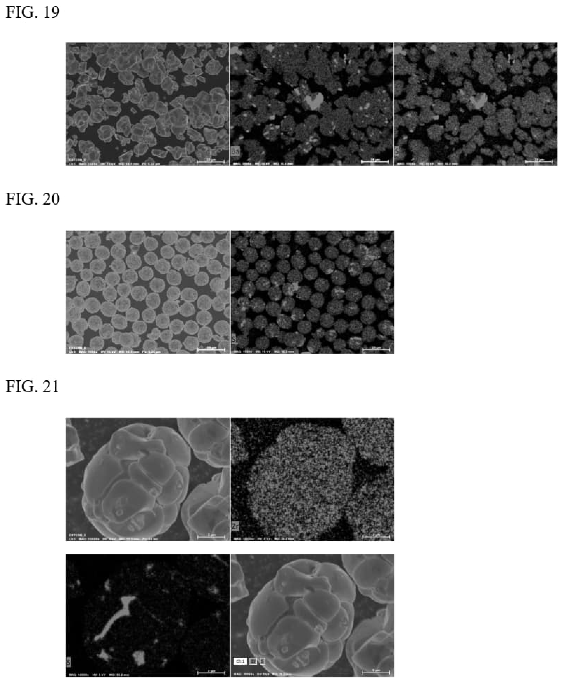

FIG. 18 shows the results of surface EDS analysis of the lithium transition metal oxide included in the positive electrode active material according to Example 3, and FIG. 19 shows the results of surface EDS analysis of the lithium transition metal oxide included in the positive electrode active material according to Example 11.

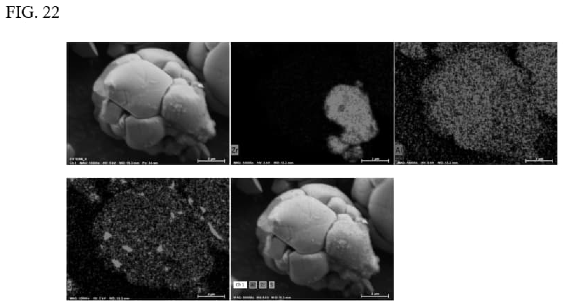

FIG. 20 shows the results of surface EDS analysis of the lithium transition metal oxide included in the positive electrode active material according to Comparative Example 1, FIG. 21 shows the results of surface EDS analysis of the lithium transition metal oxide included in the positive electrode active material according to Comparative Example 5, and FIG. 22 shows the results of surface EDS analysis of the lithium transition metal oxide included in the positive electrode active material according to Comparative Example 6.

Referring to FIG. 20, it can be confirmed that a sulfur (S) element remains on the surface of the lithium transition metal oxide according to Comparative Example 1. The sulfur (S) element remaining on the surface of the lithium transition metal oxide according to Comparative Example 1 is due to transition metal sulfate used in the precursor synthesis step, and is highly likely to be Li₂SO₄ formed by reaction of lithium impurities and sulfate.

It can be confirmed that, since the lithium transition metal oxide according to Comparative Example 1 was not washed with water after synthesis, a large amount of the sulfur (S) element remains on the surface of the lithium transition metal oxide.

Meanwhile, referring to FIGS. 18 and 19, it can be confirmed that, similar to Comparative Example 1, a sulfur (S) element remains on the surface of the lithium transition metal oxide. However, in the case of Example 3 and Example 11, the detection position of barium (Ba) and the detection position of sulfur (S) almost coincide, which means that barium (Ba) and sulfur (S) formed a coating in the form of a compound (for example, BaSO₄).

On the other hand, referring to FIGS. 21 and 22, unlike FIGS. 18 and 19, in the case of Comparative Example 5 and Comparative Example 6, the detection position of aluminum (Al) or zirconium (Zr) and the detection position of sulfur (S) do not coincide, and in particular, it can be confirmed that there is a region in which sulfur (S) is aggregated on the surface. This means that aluminum (Al) or zirconium (Zr) and sulfur (S) did not form a compound that was coated. In this case, the sulfur (S) element remaining on the surface of the lithium transition metal oxide according to Comparative Example 5 and Comparative Example 6 is highly likely to be Li₂SO₄ formed by reaction of lithium impurities and sulfate.

### Experimental Example 3. Evaluation of Electrochemical Characteristics of Lithium Secondary Battery (Half-Cell)

For the lithium secondary battery (half-cell) prepared in Preparation Example 2, capacity per unit volume was measured through a charge/discharge experiment in which a discharge rate of 1C/1C was applied within a driving voltage range of 3.0V to 4.4V at 25°C. The capacity per unit volume (mAh/cc) was calculated by multiplying the initial discharge capacity (mAh/g) by the compaction density (g/cc). The compaction density (g/cc) was measured after pressing 3 g of each positive electrode active material prepared according to Preparation Example 1 at 4.5 tons for 5 seconds using a pelletizer.

The measurement results are shown in Table 3 below.

**[Table 3]**

| Classification | Capacity Per Unit Volume (mAh/cc) |
|---|---|
| Example 1 | 637.6 |
| Example 2 | 631.5 |
| Example 3 | 620.2 |
| Example 4 | 627.8 |
| Example 5 | 629.3 |
| Example 6 | 626.3 |
| Example 7 | 629.3 |
| Example 8 | 632.0 |
| Example 9 | 630.9 |
| Example 10 | 639.8 |
| Example 11 | 638.9 |
| Comparative Example 1 | 614.5 |
| Comparative Example 2 | 616.0 |
| Comparative Example 3 | 600.9 |
| Comparative Example 4 | 552.8 |
| Comparative Example 5 | 529.8 |
| Comparative Example 6 | 527.8 |

Comparing Examples 1 to 11 with Comparative Examples 4 to 6, which have similar average particle diameters of unit particles described in Table 2, it can be confirmed that the capacity per unit volume of lithium secondary batteries using the positive electrode active materials according to Examples 1 to 11 in which a coating portion containing barium (Ba) and sulfur (S) is formed is greater than that of lithium secondary batteries using the positive electrode active materials according to Comparative Examples 4 to 6. In addition, it can be confirmed that the capacity per unit volume of lithium secondary batteries using the positive electrode active materials according to Examples 1 to 11 is greater than that of lithium secondary batteries using the positive electrode active materials according to Comparative Examples 1 to 3 having a polycrystal structure in which the number of unit particles exceeds 30.

### Experimental Example 4. Evaluation of Stability of Lithium Secondary Battery (Full-Cell)

For the lithium secondary battery (full-cell) prepared in Preparation Example 3, after 500 cycles of charge/discharge were performed under conditions of 25°C, a voltage range of 3.0V to 4.3V, and 1C/1C using an electrochemical analyzer (Toyo, Toscat-3100), a volume change amount of the pouch cell (v1) after 500 cycles of charge/discharge relative to the initial pouch cell volume was measured using an electronic hydrometer (SID-220W). Then, after storing the pouch cell (v1) after 500 cycles of charge/discharge at 25°C for 4 weeks, the volume expansion rate of the pouch cell (v2) after 4 weeks relative to the volume of the pouch cell (v1) after 500 cycles of charge/discharge was measured.

The measurement results are shown in Table 4 below.

**[Table 4]**

| Classification | Volume Expansion Rate (%) |
|---|---|
| Example 5 | 5.2 |
| Comparative Example 2 | 17.7 |
| Comparative Example 4 | 8.3 |

Referring to the results of Table 4, it can be confirmed that the volume expansion rate of the lithium secondary battery (full-cell) using the positive electrode active material according to Comparative Example 2 is greater than that of the lithium secondary battery (full-cell) using the positive electrode active material according to Example 5. The above results are expected to be attributable to the presence or absence of a coating portion containing barium (Ba) and sulfur (S) and to differences in the average particle diameter of the unit particles. In addition, it can be confirmed that the volume expansion rate of the lithium secondary battery (full-cell) using the positive electrode active material according to Comparative Example 4 is greater than that of the lithium secondary battery (full-cell) using the positive electrode active material according to Example 5. The above results are expected to be attributable to the presence or absence of a coating portion containing barium (Ba) and sulfur (S).

### Experimental Example 5. Analysis of Content of Surface Residual Lithium Impurities of Positive Electrode Active Material

The content of lithium impurities remaining on the surface of each positive electrode active material prepared according to Preparation Example 1 was quantitatively analyzed through a known method. Specifically, 5g of each positive electrode active material prepared according to Preparation Example 1 and 100g of deionized water were placed in a beaker having a capacity of 300mL, and then stirred at a speed of 300rpm for 15 minutes using a magnetic bar.

Thereafter, after filtration using a vacuum flask, a 50g aliquot was collected. The collected solution was placed in an automatic measuring device (Auto titrator) container and automatically titrated with 0.1N HCl with reference to the Warder Method to measure the values of LiOH and Li₂CO₃ in the solution.

The residual lithium analysis results are shown in Table 5 below.

**[Table 5]**

| Classification | LiOH (ppm) | Li₂CO₃ (ppm) | Sum (ppm) |
|---|---|---|---|
| Example 1 | 13,868 | 3372 | 17,240 |
| Example 2 | 14,000 | 3227 | 17,228 |
| Example 3 | 15,915 | 3486 | 19,400 |
| Example 4 | 14,995 | 2486 | 17,481 |
| Example 5 | 11,740 | 2944 | 14,684 |
| Example 6 | 14,891 | 2800 | 17,691 |
| Example 7 | 17,714 | 2739 | 20,453 |
| Example 8 | 17,004 | 2826 | 19,830 |
| Example 9 | 14,258 | 2198 | 16,456 |
| Example 10 | 15,829 | 2570 | 18,399 |
| Example 11 | 16,795 | 3088 | 19,883 |
| Comparative Example 3 | 19,652 | 2883 | 22,536 |
| Comparative Example 4 | 43,097 | 6429 | 49,526 |
| Comparative Example 5 | 19,074 | 4705 | 23,779 |
| Comparative Example 6 | 22,747 | 3191 | 25,938 |

Referring to the results of Table 5, when the average particle diameter of unit particles constituting the lithium transition metal oxide is similar, it can be confirmed that by forming a coating portion containing barium (Ba) and sulfur (S) on the surface of the lithium transition metal oxide, the content of lithium impurities was reduced to or below a certain level even without a washing process. In addition, referring to the results of Comparative Examples 5 and 6, it can be confirmed that even when a coating portion is formed on the surface of the lithium transition metal oxide using zirconium or aluminum instead of barium, the effect of reducing lithium impurities is insufficient compared to Comparative Example 3.

Although the embodiments of the present invention have been described above, a person having ordinary knowledge in the art will be able to variously modify and change the present invention by addition, change, deletion, or addition of components, and the like within a range not departing from the spirit of the present invention described in the claims, and this will also be included within the scope of rights of the present invention.

## Claims

1. A positive electrode active material, comprising:
a lithium transition metal oxide capable of intercalation/deintercalation of lithium; and
a coating portion present on at least a part of the surface of the lithium transition metal oxide;
wherein the coating portion comprises barium (Ba) and sulfur (S).

2. The positive electrode active material of claim 1, wherein the lithium transition metal oxide comprises at least one selected from nickel, cobalt, manganese, and aluminum.

3. The positive electrode active material of claim 1, wherein the lithium transition metal oxide comprises nickel, cobalt, and manganese.

4. The positive electrode active material of claim 1, wherein barium (Ba) is doped into a crystal lattice of the lithium transition metal oxide.

5. The positive electrode active material of claim 1, wherein the lithium transition metal oxide has at least one of a single-particle form consisting of one unit particle and a secondary particle form in which a plurality of unit particles are aggregated.

6. The positive electrode active material of claim 5, wherein an average particle diameter of the unit particle measured from an SEM image of the lithium transition metal oxide is 1.5 µm to 7.5 µm.

7. The positive electrode active material of claim 1, wherein the lithium transition metal oxide has a single-particle form, and barium (Ba) and sulfur (S) are present on at least a part of the surface of the single particle.

8. The positive electrode active material of claim 1, wherein the lithium transition metal oxide has a pseudo-single particle form in which 30 or fewer unit particles are aggregated, and barium (Ba) and sulfur (S) are present on at least a part of a surface of a unit particle forming an outermost surface of the pseudo-single particle, a surface of a unit particle isolated inside the pseudo-single particle, and an interface between unit particles isolated inside the pseudo-single particle.

9. The positive electrode active material of claim 1, wherein the lithium transition metal oxide comprises nickel in an amount of 60 mol% or more with respect to all elements excluding lithium.

10. The positive electrode active material of claim 1, wherein the lithium transition metal oxide has an average composition represented by the following Chemical Formula 1:
[Chemical Formula 1] LiₐNi_{1-(b+c+d)}Co_{b}M1_{c}M2_{d}O₂
In Chemical Formula 1,
M1 is at least one selected from Mn and Al,
M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu,
0.85≤a≤1.15, 0≤b≤0.20, 0≤c≤0.20, 0≤d≤0.05, and 0<b+c≤0.40.

11. The positive electrode active material of claim 1, wherein barium (Ba) contained in the coating portion is contained in an amount of 200 ppm to 30,000 ppm based on the total weight of the positive electrode active material.

12. The positive electrode active material of claim 1, wherein sulfur (S) contained in the coating portion is contained in an amount of 500 ppm to 3,000 ppm based on the total weight of the positive electrode active material.

13. The positive electrode active material of claim 1, wherein a weight ratio (S/Ba) of sulfur (S) to barium (Ba) contained in the coating portion is 0.02 or greater and 15.0 or less.

14. The positive electrode active material of claim 1, wherein the coating portion comprises BaSO₄.

15. A positive electrode comprising the positive electrode active material according to any one of claims 1 to 14.

16. A lithium secondary battery using the positive electrode according to claim 15.
